# EUROPEAN PATENT SPECIFICATION

(11) **EP 3 860 410 B1**
(45) Date of publication and mention of the grant of the patent: **18.06.2025**
(21) Application number: 19805730.9
(22) Date of filing: 26.09.2019
(51) Int. Cl.: A47J 31/00, A47J 31/36

(54) **METHOD FOR THE DISPENSING OF A HOT BEVERAGE**
VERFAHREN ZUR AUSGABE EINES HEISSGETRÄNKS
PROCÉDÉ PERMETTANT LA DISTRIBUTION D'UNE BOISSON CHAUDE

(30) Priority: 02.10.2018 DE 102018007750
(43) Date of publication of application: 11.08.2021
(73) Proprietor: Spengler GmbH & Co. KG, 76646 Bruchsal (DE)
(72) Inventor: HEUBERGER, Ralf, 76857 Albersweiler (DE); URECH, Lukas, 68723 Plankstadt (DE); BILFINGER, Jan, 76703 Kraichtal (DE)
(74) Representative: Kesselhut, Wolf
(86) International application number: PCT/IB2019/001048
(87) International publication number: WO 2020/070551

(56) References cited:
- EP-A1- 0 483 244
- EP-A1- 0 483 244
- WO-A1-2016/164796
- WO-A1-2016/164796
- WO-A1-88/02612
- WO-A1-88/02612
- US-A1- 2017 079 465
- US-A1- 2017 079 465

## Description

### 1. Field of the Invention

The Invention relates to a method for the dispensing of a hot beverage and a device for implementing the method.

### 2. Discussion of the Background Art

A number of different parameters are taken into consideration in the brewing of hot beverages in modern beverage vending machines. In the preparation of coffee, for example, the degrees of roasting and grinding of the coffee beans, the ratio of coffee powder to hot water, or the duration of the brewing process are taken into account for this purpose. Also, parameters such as the temperature of the hot water, the pressure inside the brewing chamber, or the type of filter are selected in a targeted manner, based on their effects on the taste of a finished coffee drink.

In this case, the concentration of the coffee solution is decisive for the taste of a coffee drink. The latter corresponds to the amount of dissolved coffee in relation to the hot water and determines the strength of a coffee. The concentration of a coffee depends on how much coffee powder is used for the brewing process and what proportion of the coffee powder is dissolved in the hot water. The proportion by weight of the coffee powder, which is used for the brewing process and which is dissolved in water, is designated in this connection as extraction and increases with increasing duration of the brewing process. With increasing duration of the brewing process, however, increasingly more undesired bitter substances are also leached out of the coffee powder and transferred to the liquid.

In order to increase the concentration of a coffee drink, accordingly, on the one hand, the quantity of coffee powder being brewed, and, on the other hand, the duration of the brewing process can be increased. In order to avoid an increased quantity of bitter substances in the finished coffee drink due to a long brewing time, the quantity of coffee powder is usually increased instead of the brewing time, so as to obtain the desired concentration. The optimal concentration for black coffee, for example, lies between 1.30 wt.% and 1.55 wt.%, and the optimal extraction lies between 18 wt.% and 22 wt.%, in each case referred to the total weight of the finished hot beverage.

The previous statements apply in principle both to espresso as well as to corresponding application also for tea, which is brewed in a hot beverage vending machine.

Known from EP 1 005 821 B1 is a brewing device, which comprises a brewing unit with a brewing chamber for the preparation of coffee or tea. Optimal values for the concentration or extraction cannot be obtained with such a brewing unit, however, since a sedimentation of the brewing material takes place inside the brewing chamber during the brewing process. As a consequence of this sedimentation, the brewing material only comes into contact with a small portion of the hot water that is introduced. In this case, a high extraction results in this comparatively small contact volume, which leads to the circumstance that the passage of the aromas from the brewing material into the hot water is adversely influenced by the small concentration gradient between the particles of the brewing material and the hot water surrounding them. The document provides no indication of how to improve the extraction of the aromatic substances from the brewing material into the hot water.

WO 2016/164796 A1 discloses a brewing apparatus for preparing and dispensing a cold beverage which comprises a brewing chamber, to which an inert gas is supplied. The document does not disclose to supply compressed air with an adjustable delay after starting the brewing process.

Accordingly, the object of the present disclosure is to create a method for the
preparation of a hot beverage, in particular of coffee or tea, with which the extraction of the flavors contained in the brewing material into the hot water can be improved during the brewing process.

Another object of the disclosure is to create a device for implementing the method.

### SUMMARY

According to the disclosure, a device for implementing the method according to the disclosure, which is designated also in the following as a beverage vending machine, comprises a hot water generating system for the generation of hot water and a brewing chamber, as is described in detail, e.g., in the 10 above-mentioned EP 1 005 821 B1. For brewing the hot beverage, the brewing chamber is filled with the brewing material, i.e., coffee powder or espresso powder or tea, and, after this, it is loaded with hot water via a hot water inlet. After the brewing process, the hot beverage is delivered from the brewing chamber into a vessel via a hot beverage outlet and a drain line connected therewith. The method is characterized in that the hot beverage outlet is loaded with compressed gas from a compressed gas source during a brewing process, wherein the compressed gas is ambient air which is introduced into the brewing chamber with an adjustable delay after the start of the brewing process.

As the Applicant has found, the suspension of hot water and brewing material is intermixed due to the compressed gas introduced into the brewing chamber and is homogenized continually thereby during the brewing process. A sedimentation of the brewing material on the bottom of the brewing chamber is effectively prevented thereby, and the brewing material comes into contact with a larger quantity of hot water in an advantageous way over the entire duration of the brewing process. The contact volume increased thereby leads to an enhanced extraction of aromatic substances with the quantity of brewing material remaining the same and with the same brewing time. Consequently, by the method according to the disclosure, the quantity of required brewing material can be reduced in an advantageous way, in order to obtain the same concentration of all dissolved aromatic substances in the finished hot beverage without increasing the brewing time and thereby also increasing the quantity of bitter substances released in a disadvantageous way. Furthermore, due to the compressed gas, which flows through the hot beverage outlet into the brewing chamber, a clogging of the brewing filter found on the side of the brewing chamber in front of the hot beverage outlet is prevented, and in this way the filter can be regenerated.

The introducing of the compressed gas into the brewing chamber with an adjustable delay after the beginning of the brewing process results in the advantage that the brewing material, e.g., coffee powder, floating directly on the surface is already wetted with water after the introduction of the hot water, and due to the rising compressed gas, is not transported to the upper part of the inner wall of the brewing chamber, does not remain attached thereto, and thus does not lead to undesired deposits. In the case of a brewing process that lasts, e.g., for 15 seconds, this delay can amount to two seconds, for example.

In addition, for emptying the brewing chamber after a brewing process, it can be provided that the brewing chamber is loaded with compressed gas from the same compressed gas source or from another compressed gas source by way of the hot water inlet. Due to the compressed gas, which flows through the hot water inlet into the brewing chamber for this purpose, the hot beverage containing the aromas of the brewing material dissolved therein is pressed through the brewing filter by the prevailing overpressure, the filter sealing the hot beverage outlet like a sieve, preventing a discharging of the spent brewing material from the hot beverage outlet. The latter spent material is removed from the cylinder-shaped brewing chamber after this by raising the top and/or bottom part of this brewing chamber, as is described, for example, in the abovementioned EP 1 005 821 B1.

According to another object of the invention, a device for
implementing the process described above comprises a hot water generator for generating hot water and a brewing chamber which comprises a hot water inlet which can be flow-connected to the hot water generator for supplying hot water, and a hot drink outlet which is arranged on the underside of the brewing chamber and is intended for dispensing a hot drink brewed in the brewing chamber. The hot water inlet is connectable in terms of flow to the hot water generator via at least one inlet valve, and the hot drink outlet is connectable via at least one outlet-side valve to a discharge line for dispensing the hot drink into a vessel. The hot beverage outlet is supplied with compressed gas from a compressed gas source during a brewing operation via a branch line and a switchable further outlet-side valve.

According to the invention, the compressed gas is ambient air, and the switchable further outlet-side valve is configured to introduce the compressed gas into the brewing chamber with an adjustable delay after the start of the brewing process.

The compressed gas source arranged in the device can be, as mentioned previously, an electrical pump for producing compressed air or also a compressed gas tank. As a compressed gas tank, in particular, a compressed gas cylinder can be used, which can be fluidically connected to the hot water outlet via an electrically actuatable valve, in particular a shutoff valve, which is controlled by means of an electronic control device.

The use of a compressed gas tank as a compressed gas source has the advantage that different kinds of compressed gases can be used, e.g., also mixtures of different gases, and the installation of a pump is eliminated. In contrast to this, the use of a pump or a compressor as a compressed gas source has the advantage that it does not need to be constantly changed or filled again, and in the case of compressed air, can be operated essentially in a more cost-effective manner.

According to another concept lying at the basis of the disclosure, in addition, it may be provided that the hot beverage outlet is connected to the drain line for the hot beverage by way of a flexible, deformable tubing, e.g., a silicone tubing. This opens up the possibility that at least one valve on the outlet side is executed as a pinch valve, which has an electromechanically actuated slider or pinch piece, by means of which the tubing can be pressed together for the closure thereof. The use of a pinch valve has the advantage that a complicated cleaning of the valve is eliminated, and instead of this, the flexible, deformable tubing can be changed in a simple and cost-effective way, as soon as it becomes plugged up by contaminants or becomes brittle due to aging, or has another defect.

According to another concept lying at the basis of the disclosure, the at least one valve on the outlet side can alternatively also be designed as a known 3/2-way valve.

In addition, in a particularly cost-effective embodiment of the disclosure to be fabricated, it can be provided that only a single compressed gas source is provided, which is connected to the hot water inlet of the brewing chamber via an electrically switchable shut-off valve and simultaneously to the branch line via a spring-loaded non-return valve. In this case, the branch line comprises a flexible, deformable tubing, which can be pressed together by the additional valve on the outlet side designed as an electrically switchable pinch valve, in order to seal the tubing.

### BRIEF DESCRIPTION OF THE DRAWINGS

The disclosure will be described below with reference to the drawings on the basis of a preferred embodiment of the disclosure.

In the drawings:
- Fig. 1: shows a schematic representation of a preferred embodiment of the device according to the disclosure, which comprises two compressed gas sources;
- Fig. 2: shows a schematic representation of another embodiment of the device according to the disclosure, which comprises only one compressed gas source;
- Fig. 2a: shows a schematic representation of another embodiment of the disclosure, in which, instead of a chain valve utilized in Fig. 2, a spring-loaded non-return valve is employed;
- Fig. 3: shows a schematic representation of the embodiment shown in Figure 1, in which the shut-off valve is replaced by a non-return valve;
- Fig. 4: shows a schematic representation of the embodiment shown in Figure 2, in which, instead of a chain valve, a 3/2-way valve in combination with a non-return valve is employed;

### DETAILED DESCRIPTION OF THE PREFERRED EMBODIMENT

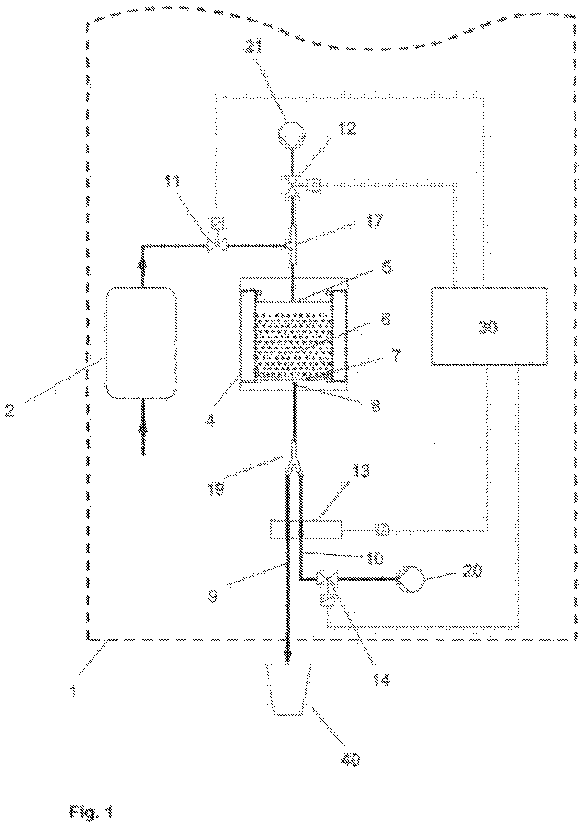

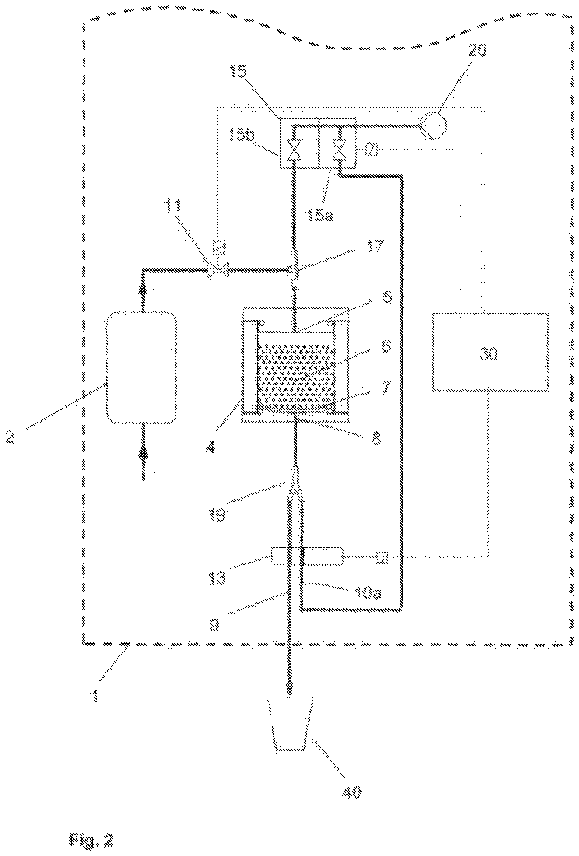

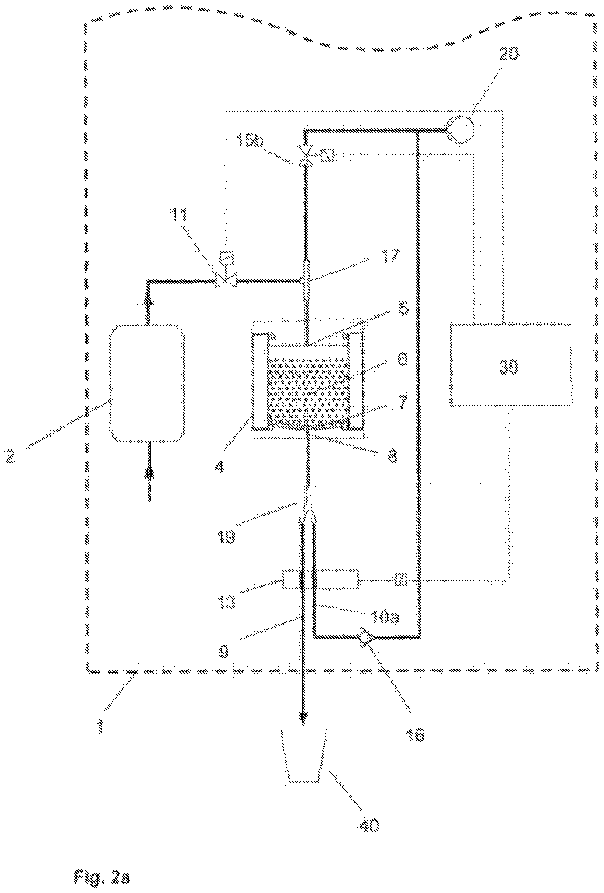

As is shown in Figures 1 and 2, a device 1 for the dispensing of a hot beverage comprises a hot water generating system 2 for the generation of hot water having a temperature of, e.g., 80 °C to 100 °C, and a brewing chamber 4. The brewing chamber has a hot water inlet 5 that can be fluidically connected to the hot water generating system 2 for the supply of hot water, as well as a hot beverage outlet 8 arranged on the bottom of the brewing chamber 4; the hot beverage brewed in the brewing chamber 4 can be dispensed from the outlet via a drain line 9.

Inside the brewing chamber 4 is found a brewing filter 7, which prevents the large particles of brewing material 6, e.g., coffee powders, from entering into the hot beverage outlet 8 and beyond this into the drain line 9 during the brewing process. As is shown in Fig. 1, for the embodiment of the disclosure shown therein, the hot water inlet 5 is fluidically connected to the hot water generating system 2 via a T-shaped connection piece 17 and a first electrically switchable valve 11 on the inlet side. The hot beverage outlet 8, in contrast to this, is connected to the drain line 9 for the dispensing of the freshly brewed hot beverage into a vessel 40 via a Y-shaped connection piece 19 and a first electrically switchable pinch valve 13 on the outlet side. By means of a line 10 which branches off via the Y-shaped connection piece 19 and springs from the latter, the hot beverage outlet 8 is connected to a compressed gas source 20 via an intermediately connected second electrically switchable shut-off valve 14 on the outlet side, this valve 14 being connected in the same way as are also the rest of the valves 11, 12 and 13 to an electronic control device 30, which controls them.

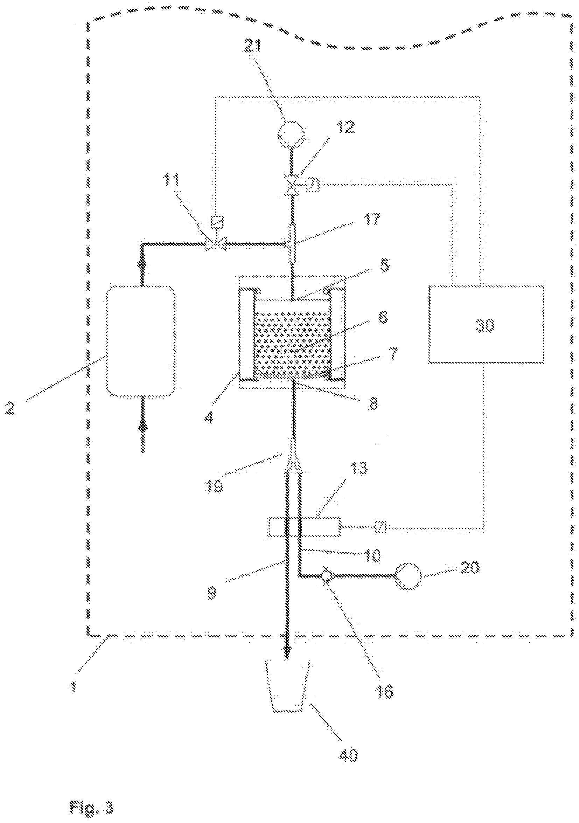

In the preferred embodiment shown in Figure 1, in addition, the device 1 for the dispensing of a hot beverage comprises a second compressed gas source 21, which is connected to the T-shaped connection piece 17 by way of a second electrically switchable valve 12 on the inlet side, and can be utilized for the purpose of loading the brewing chamber 4 with compressed gas via the hot water inlet 5 toward the end of the brewing process. Alternatively to the embodiment shown in Fig. 1, in which two compressed air sources 20, 21 are used, the electrically switchable shut-off valve 14 employed therein, as shown in Figure 3, can be replaced by a non-return valve 16 arranged in the flow direction of the compressed gas from the compressed gas source 20, non-return or check valve 16 preventing a back flooding of the compressed gas source and, moreover, in an advantageous manner, it does not need to be actuated electrically.

Figure 2 shows another embodiment of the device 1 according to the disclosure for the dispensing of a hot beverage, which is characterized in that one and the same compressed gas source 20 can be used for the purpose of loading the brewing chamber 4 with compressed gas both on the inlet side as 25 well as on the outlet side. For this purpose, the compressed gas source 20 can be connected to the hot beverage outlet 8 of the brewing chamber 4 via an electrically switchable first shut-off valve 15a during the brewing process by way of a compressed air line 10a, the first electrically switchable pinch valve 13 on the outlet side and the Y-shaped connection piece 19 on the outlet side. In this case, the press piece (not shown in more detail) of the pinch valve 13, which can travel back and forth by means of the electronic control device 30 shuts off the elastically deformable drain line 9 by pressing it together to an extent such that no compressed air can escape via the drain line 9, so that the air is pressed through the brewing filter 7 in the form of rising air bubbles into the brewing chamber 4 when the compressed air source 20 is activated and the first shut-off valve 15a is opened.

In order expel the freshly brewed hot beverage from the brewing chamber 4 after a brewing process, the first shut-off valve 15a is closed and a second shut-off valve 15b that can be actuated by the electronic control device 30 is opened, this latter valve preferably being disposed together with the first blockable shut-off valve 15a in a chain valve, or a chain of valves 15. The compressed air is introduced into the brewing chamber 4 in this case with a closed first valve 11 on the inlet side, i.e., with a closed-off hot water supply from the hot water generating system 2, by way of the T-shaped connection piece 17 and the hot water inlet 5 connecting thereto, so that the brewing chamber is loaded with a pressure of, e.g., 1 bar via the compressed air source 20. Simultaneously or a short time later, the pinch valve 13 is actuated and the connection line 10a is shut off by pressing together the elastically deformable tubing segment belonging thereto of the connection line 10a and freeing up the drain line 9, whereupon the freshly brewed hot beverage can flow through the brewing filter 7 into the vessel 40 by way of the hot beverage outlet 8 and the drain line 9.

In order to clean the brewing chamber 4 following the dispensing of the hot beverage and to discard the used brewing material, the second shut-off valve 15b can be closed, the drain line 9 can be opened by means of the pinch valve 13, and, via the first valve 11, hot water can be introduced into the brewing chamber 4, said hot water removing any residues of the hot beverage that adhere to the brewing chamber 4.

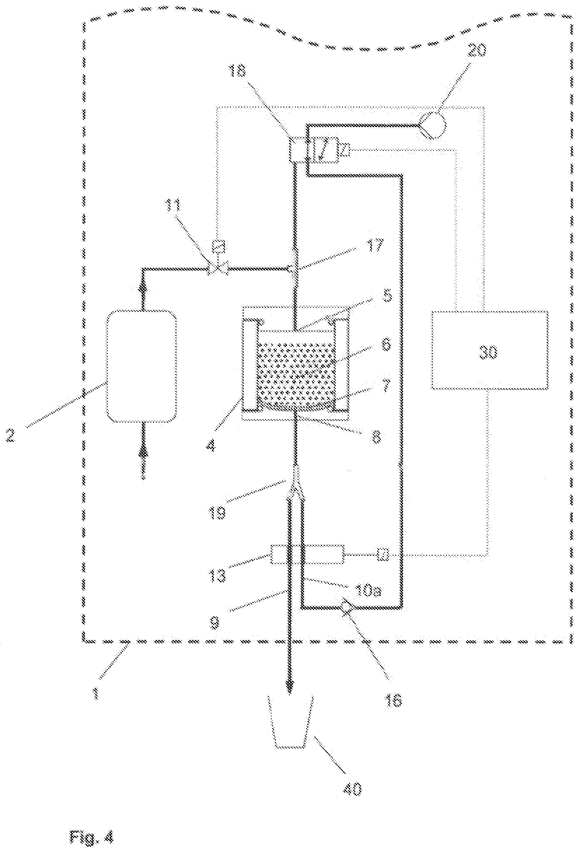

Alternatively to the described embodiment comprising a chain valve 15, this mode of operation can also be realized by a standard, closed 3/2 way valve that is disposed in the direction of flow of the compressed gas from the compressed gas source 20. In this embodiment, which is shown in Figure 4, the line 10a is also closed by means of a non-return valve 16, which is preferably spring-loaded, in order to prevent the possibility of pressing the brewing material into the compressed gas source 20.

In order to still further reduce the device cost, in addition, it can be provided, instead of the first shut-off valve 15a, to insert a spring-loaded non-return valve 16 into the line 10a, and to connect this line directly to the one compressed gas source 20, as this is shown in Fig. 2a.

The single compressed gas source 20 in this case is connected to the hot water inlet 5 via a single shut-off valve 15b, and to the line 10a via the springloaded non-return valve 16; this line 10a can be shut off by the pinch valve 13 when, in conclusion to a brewing process, the hot beverage is expelled from the brewing chamber 4 by the compressed gas from the compressed gas source 20 via the drain line 9 after opening the single shut-off valve 15b.

### List of reference numerals

- 1: Device according to the disclosure
- 2: Hot water generating system
- 4: Brewing chamber
- 5: Hot water inlet of the brewing chamber
- 6: Brewing material
- 7: Brewing filter
- 8: Hot beverage outlet of the brewing chamber
- 9: Drain line
- 10: Line between compressed gas source and Y-shaped connection piece
- 10a: Line between compressed gas source and Y-shaped connection piece
- 11: First electrically switchable valve on the inlet side
- 12: Second electrically switchable valve on the inlet side
- 13: First electrically switchable pinch valve on the outlet side
- 14: Second electrically switchable valve on the outlet side
- 15: Electrically switchable chain valve
- 15a: Electrically switchable first shut-off valve of the chain valve
- 15b: Electrically switchable second shut-off valve of the chain valve
- 16: Non-return or check valve
- 17: T-shaped connection piece
- 18: Electrically switchable 3/2-way valve
- 19: Y-shaped connection piece
- 20: First compressed gas source
- 21: Second compressed gas source
- 30: Electronic control device
- 40: Vessel

## Claims

1. A method for dispensing a hot beverage in a beverage machine (1) which comprises a hot water generator (2) for producing hot water and a brewing chamber (4), wherein the brewing chamber (4) is filled with brewing material (6) for brewing a hot beverage, and is subsequently supplied with hot water via a hot water inlet (5), and after the brewing operation the hot drink is discharged from the brewing chamber (4) into a vessel (40) via a hot drink outlet (8) and a drain line (9) connected thereto, wherein the hot beverage outlet (8) is supplied with compressed gas from a compressed gas source (20) during a brewing operation,
**characterized in that**
the compressed gas is ambient air, and **in that** the compressed gas is introduced into the brewing chamber (4) with an adjustable delay after the start of the brewing process.

2. The method according to claim 1, wherein the duration and intensity of the pressurization of the brewing chamber (4) with the compressed gas from the compressed gas source (20) are adjustable.

3. The method according to claim 1, wherein the brewing chamber (4) is subjected to compressed gas from the compressed gas source (20) or from another compressed gas source (21), for emptying the same after a brewing operation via the hot water inlet (5).

4. A device (4) for dispensing a hot beverage in a beverage machine (1), comprising a hot water generator (20) for generating hot water and a brewing chamber (4) which comprises a hot water inlet (5) which can be flow-connected to the hot water generator (20) for supplying hot water, and a hot drink outlet (8) which is arranged on the underside of the brewing chamber (4) and is intended for dispensing a hot drink brewed in the brewing chamber (4), the hot water inlet (5) being connectable in terms of flow to the hot water generator (2) via at least one inlet valve (11), and the hot drink outlet (8) being connectable via at least one outlet-side valve (13) to a discharge line (9) for dispensing the hot drink into a vessel (40), wherein the hot beverage outlet (8) is supplied with compressed gas from a compressed gas source (20; 21) during a brewing operation via a branch line (10; 10a) and a switchable further outlet-side valve (13; 14; 14a; 18), **characterized in that** the compressed gas is ambient air, and wherein the switchable further outlet-side valve (13; 14; 14a; 18) is configured to introduce the compressed gas into the brewing chamber (4) with an adjustable delay after the start of the brewing process.

5. The device according to claim 5, wherein the compressed gas source (20; 21) comprises an electrical pump for conveying compressed air.

6. The device according to claim 5, wherein the compressed gas source (20; 21) comprises a compressed gas container.

7. The device according to claim 4, wherein the hot beverage outlet (8) is connected to the drain line (9) via a flexible, deformable hose, and in that the at least one outlet-side valve (13) is a pinch valve, by means of which the hose can be compressed to close it.

8. The device according to claim 4, wherein the at least one outlet-side valve (13) is a 3/2-way valve.

9. The device according to claim 4, wherein the switchable further outlet-side valve comprises at least one valve selected from the group consisting of: a switch valve (14), a chain valve (15, 15a), and a 3/2-way valve (18), via which the compressed air source (20) can be connected to the hot drink outlet (8) via the branch line (10a).

10. The device according to claim 9, further comprising a non-return valve (16) which is disposed in the branch line (10a) downstream from the compressed gas source (20), wherein the non-return valve (16) protects the compressed gas source (20) against ingress of brewing material (6).

11. The device according to claim 4, wherein the compressed gas source (20) is connected via an electrically switchable shut-off valve (15b) to the hot water inlet (5) of the brewing chamber (4) and via a spring loaded non-return valve (16) to the branch line (10a), wherein the branch line (10a) comprises a flexibly, deformable hose, and in that the switchable further outlet-side valve is a pinch valve (13), by means of which the flexible, deformable hose can be compressed to close it.

## Patentansprüche

1. Verfahren zur Ausgabe eines Heißgetränks in einem Getränkeautomaten (1), der einen Heißwassererzeuger (2) zur Erzeugung von heißem Wasser und eine Brühkammer (4) umfasst, wobei die Brühkammer (4) zum Brühen eines Heißgetränks mit Brühgut (6) befüllt, und im Anschluss daran über einen Heißwassereinlass (5) mit Heißwasser beaufschlagt wird, und das Heißgetränk nach dem Brühvorgang über einen Heißgetränkeauslass (8) und eine damit verbundene Ablaufleitung (9) aus der Brühkammer (4) in ein Gefäß (40) abgeleitet wird, wobei der Heißgetränkeauslass (8) während eines Brühvorgangs mit Druckgas aus einer Druckgasquelle (20) beaufschlagbar ist,
**dadurch gekennzeichnet, dass**
das Druckgas Umgebungsluft ist und nach Beginn des Brühvorgangs mit einer einstellbaren Verzögerung in die Brühkammer (4) einleitbar ist.

2. Verfahren nach Anspruch 1,
**dadurch gekennzeichnet, dass**
die Dauer und die Stärke der Beaufschlagung der Brühkammer (4) mit Druckgas aus der Druckgasquelle (20) einstellbar ist.

3. Verfahren nach Anspruch 1,
**dadurch gekennzeichnet, dass**
die Brühkammer (4) zum Entleeren derselben nach einem Brühvorgang über den Heißwassereinlass (5) mit Druckgas der Druckgasquelle (20) oder einer weiteren Druckgasquelle (21) beaufschlagt wird.

4. Vorrichtung (4) zur Ausgabe eines Heißgetränkes in einem Getränkeautomaten (1), umfassend einen Heißwassererzeuger (20) zur Erzeugung von heißem Wasser und eine Brühkammer (4), welche einen mit dem Heißwassererzeuger (20) zur Zufuhr von Heißwasser strömungsmäßig verbindbaren Heißwassereinlass (5) sowie einen auf der Unterseite der Brühkammer (4) angeordneten Heißgetränkeauslass (8) zur Ausgabe eines in der Brühkammer (4) gebrühten Heißgetränks umfasst, wobei der Heißwassereinlass (5) über wenigstens ein Einlassventil (11) mit dem Heißwassererzeuger (2) strömungsmäßig verbindbar ist, und der Heißgetränkeauslass (8) über wenigstens ein auslassseitiges Ventil (13) mit einer Ablaufleitung (9) zur Ausgabe des Heißgetränks in ein Gefäß (40) verbindbar ist, wobei der Heißgetränkeauslass (8) über eine Abzweigleitung (10; 10a) und ein schaltbares weiteres auslassseitiges Ventil (13; 14; 15a; 18) während eines Brühvorgangs mit Druckgas aus einer Druckgasquelle (20; 21) beaufschlagbar ist, **dadurch gekennzeichnet, dass**
das Druckgas Umgebungsluft ist, und dass das schaltbare weitere auslassseitige Ventil (13; 14; 15a; 18) dazu eingerichtet ist, das Druckgas nach Beginn des Brühvorgangs mit einer einstellbaren Verzögerung in die Brühkammer (4) einzuleiten.

5. Vorrichtung nach Anspruch 4,
**dadurch gekennzeichnet, dass**
die Druckgasquelle (20; 21) eine elektrische Pumpe zum Fördern von Druckluft umfasst.

6. Vorrichtung nach Anspruch 4,
**dadurch gekennzeichnet, dass**
die Druckgasquelle (20; 21) einen Druckgasbehälter, insbesondere eine Druckgasflasche, umfasst.

7. Vorrichtung nach Anspruch 4,
**dadurch gekennzeichnet, dass**
der Heißgetränkeauslass (8) mit der Ablaufleitung (9) über einen flexibel deformierbaren Schlauch verbunden ist, und dass das wenigstens eine auslassseitige Ventil (13) ein Quetschventil ist, mittels welchem der Schlauch zum Verschließen desselben zusammenpressbar ist.

8. Vorrichtung nach Anspruch 4,
**dadurch gekennzeichnet, dass**
das wenigstens eine auslassseitige Ventil ein 3/2 Wegeventil (13) ist.

9. Vorrichtung nach Anspruch 4,
**dadurch gekennzeichnet, dass**
das schaltbare weitere auslassseitige Ventil ein Schaltventil (14) oder ein Kettenventil (15, 15a) oder ein 3/2 Wegeventil (18) umfasst, über welches die Druckluftquelle (20) über die Abzweigleitung (10a) mit dem Heißgetränkeauslass (8) verbindbar ist.

10. Vorrichtung nach Anspruch 9,
**dadurch gekennzeichnet, dass**
in der Abzweigleitung (10a) stromabwärts der Druckgasquelle (20) ein Rückschlagventil (16) angeordnet ist, welches die Druckgasquelle (20) gegen ein Eindringen von Brühgut (6) schützt.

11. Vorrichtung nach Anspruch 4,
**dadurch gekennzeichnet, dass**
die Druckgasquelle (20) über ein elektrisch schaltbares Absperrventil (15b) mit dem Heißwassereinlass (5) der Brühkammer (4) und über ein federbelastetes Rückschlagventil (16) mit der Abzweigleitung (10a) verbunden ist, wobei die Abzweigleitung (10a) einen flexibel deformierbaren Schlauch umfasst, und dass das schaltbare weitere auslassseitige Ventil ein Quetschventil (13) ist, mittels welchem der flexibel deformierbare Schlauch zum Verschließen desselben zusammenpressbar ist.

## Revendications

1. Procédé de distribution d'une boisson chaude dans une machine à boissons (1) qui comprend un générateur d'eau chaude (2) destiné à produire de l'eau chaude et une chambre d'infusion (4), la chambre d'infusion (4) étant remplie de substance à infuser (6) pour préparer une boisson chaude, et étant ensuite alimentée en eau chaude par l'intermédiaire d'une entrée d'eau chaude (5), et après l'opération d'infusion, la boisson chaude étant distribuée à partir de la chambre d'infusion (4) dans un récipient (40) par l'intermédiaire d'une sortie de boisson chaude (8) et d'un conduit de vidange (9) raccordé à celle-ci, la sortie de boisson chaude (8) étant alimentée en gaz comprimé par une source de gaz comprimé (20) pendant une opération d'infusion, **caractérisé en ce que**
le gaz comprimé est de l'air ambiant, et le gaz comprimé est introduit dans la chambre d'infusion (4) avec un délai réglable après le début du processus d'infusion.

2. Procédé selon la revendication 1, la durée et l'intensité de la pressurisation de la chambre d'infusion (4) au moyen du gaz comprimé provenant de la source de gaz comprimé (20) étant réglables.

3. Procédé selon la revendication 1, la chambre d'infusion (4) étant soumise au gaz comprimé provenant de la source de gaz comprimé (20) ou d'une autre source de gaz comprimé (21), pour la vider après une opération d'infusion par l'intermédiaire de l'entrée d'eau chaude (5).

4. Dispositif (4) pour distribuer une boisson chaude dans une machine à boissons (1), comprenant un générateur d'eau chaude (20) destiné à générer de l'eau chaude et une chambre d'infusion (4) qui comprend une entrée d'eau chaude (5) qui peut être raccordée pour l'écoulement au générateur d'eau chaude (20) pour fournir de l'eau chaude, et une sortie de boisson chaude (8) qui est située sur la face inférieure de la chambre d'infusion (4) et qui est destinée à distribuer une boisson chaude infusée dans la chambre d'infusion (4), l'entrée d'eau chaude (5) pouvant être raccordée en termes d'écoulement au générateur d'eau chaude (2) par l'intermédiaire d'au moins une soupape d'entrée (11), et la sortie de boisson chaude (8) pouvant être raccordée par l'intermédiaire d'au moins une soupape côté sortie (13) à un conduit d'évacuation (9) pour distribuer la boisson chaude dans un récipient (40), la sortie de boisson chaude (8) étant alimentée en gaz comprimé provenant d'une source de gaz comprimé (20 ; 21) au cours d'une opération d'infusion par l'intermédiaire d'un conduit de dérivation (10 ; 10a) et d'une soupape côté sortie supplémentaire commutable (13 ; 14 ; 14a ; 18),
**caractérisé en ce que**
le gaz comprimé est de l'air ambiant, et la soupape de sortie supplémentaire commutable (13 ; 14 ; 14a ; 18) est conçue pour introduire le gaz comprimé dans la chambre d'infusion (4) avec un délai réglable après le début du processus d'infusion.

5. Dispositif selon la revendication 5, la source de gaz comprimé (20 ; 21) comprenant une pompe électrique pour transporter de l'air comprimé.

6. Dispositif selon la revendication 5, la source de gaz comprimé (20 ; 21) comprenant un réservoir de gaz comprimé.

7. Dispositif selon la revendication 4, la sortie de boisson chaude (8) étant raccordée au conduit de vidange (9) par un tuyau flexible déformable, et l'au moins une soupape côté sortie (13) étant une soupape à pincement, au moyen de laquelle le tuyau peut être comprimé pour le fermer.

8. Dispositif selon la revendication 4, l'au moins une soupape côté sortie (13) étant une soupape 3/2 voies.

9. Dispositif selon la revendication 4, la soupape côté sortie supplémentaire commutable comprenant au moins une soupape choisie dans le groupe constitué par : une soupape de commutation (14), une soupape à chaîne (15, 15a), et une soupape 3/2 voies (18), par laquelle la source d'air comprimé (20) peut être raccordée à la sortie de boisson chaude (8) par l'intermédiaire du conduit de dérivation (10a).

10. Dispositif selon la revendication 9, comprenant en outre un clapet anti-retour (16) qui est situé dans le conduit de dérivation (10a) en aval de la source de gaz comprimé (20), le clapet anti-retour (16) protégeant la source de gaz comprimé (20) contre la pénétration de la substance à infuser (6).

11. Dispositif selon la revendication 4, la source de gaz comprimé (20) étant raccordée par une soupape d'arrêt commutable électriquement (15b) à l'entrée d'eau chaude (5) de la chambre d'infusion (4) et par un clapet anti-retour à ressort (16) au conduit de dérivation (10a), le conduit de dérivation (10a) comprenant un tuyau flexible déformable, et la soupape de sortie supplémentaire commutable étant une soupape à pincement (13), au moyen de laquelle le tuyau flexible déformable peut être comprimé pour le fermer.
